# FASCICULE DE BREVET EUROPEEN

(11) **EP 2 320 502 B1**
(45) Date de publication et mention de la délivrance du brevet: **02.07.2014**
(21) Numéro de dépôt: 10189034.1
(22) Date de dépôt: 27.10.2010
(51) Int. Cl.: H01M 4/70, H01M 4/04, H01M 10/0562, H01M 10/0585, H01M 4/1397, H01M 4/1395

(54) **Procédé de formation d'une batterie de type lithium-ion en couches minces**
Aufbauverfahren einer Batterie vom Lithium-Ionen-Typ aus Dünnschichten
Method for forming a thin-layer lithium-ion battery

(30) Priorité: 06.11.2009 FR 0957867
(43) Date de publication de la demande: 11.05.2011
(73) Titulaire: STMicroelectronics (Tours) SAS, 37100 Tours (FR)
(72) Inventeur: Bouillon, Pierre, 37230, LUYNES (FR); Guy-Bouyssou, Delphine, 37230, LUYNES (FR)
(74) Mandataire: Thibon, Laurent

(56) Documents cités:
- FR-A1- 2 762 448
- FR-A1- 2 873 854
- US-A- 5 171 413

## Description

### Domaine de l'invention

La présente invention concerne des batteries de type lithium-ion en technologie de couches minces. Plus particulièrement, la présente invention concerne un procédé de formation de telles batteries.

### Exposé de l'art antérieur

Les batteries de type lithium-ion sont constituées d'un empilement d'une couche de cathode, d'une couche d'électrolyte et d'une couche d'anode. Pendant la charge de la batterie, des ions lithium se déplacent de la cathode vers l'anode tandis que, lors de la décharge de la batterie, les ions lithium se déplacent de l'anode vers la cathode.

Des microbatteries "tout solide" dont leurs composants se présentent sous forme de couches minces empilées sont connues de FR 2 873 854 A1, FR 2 762 448 A1 et US 5 171 413.

Les matériaux des couches de cathode, d'électrolyte et d'anode sont choisis en fonction de la tension que l'on souhaite obtenir aux bornes de la batterie et en fonction de l'application souhaitée de celle-ci. Notamment, pour des applications de sauvegarde/maintien de l'information dans des dispositifs portables tels que des téléphones ou des ordinateurs, les batteries sont généralement prévues pour fournir une tension inférieure à 2 V. Pour obtenir cette tension, on peut utiliser une batterie fournissant une tension comprise entre 4 et 4,5 V, en association avec un circuit abaisseur de tension. Une telle batterie comporte par exemple une cathode en oxyde de cobalt lithié (LiCoO₂). On peut également utiliser une batterie fournissant une tension inférieure à 3 V, comprenant par exemple une cathode à base d'oxysulfure de titane (TiOS). C'est à ce dernier type de batterie que l'on s'intéresse ici.

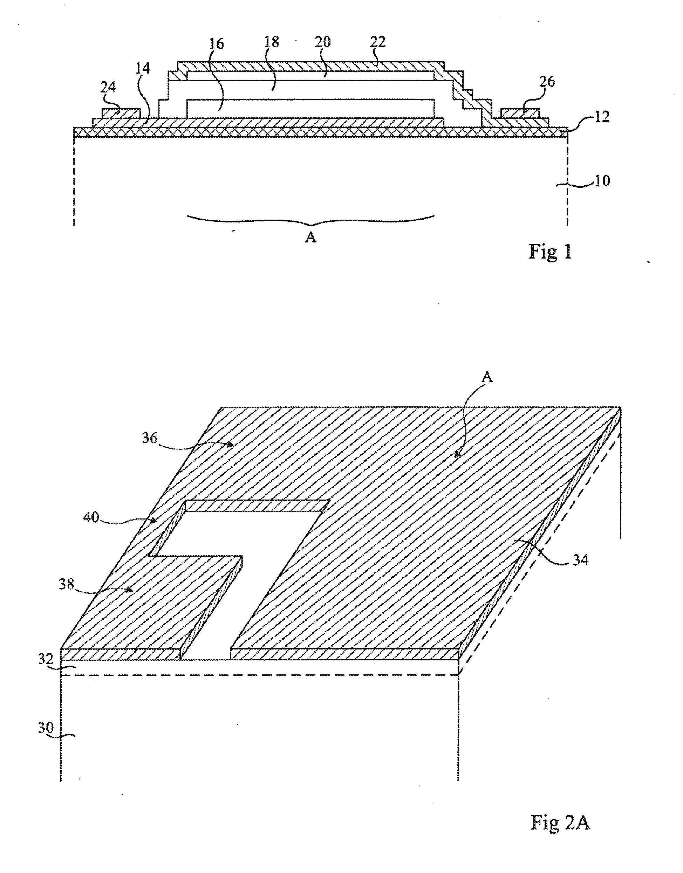

La figure 1 illustre un exemple de batterie de type lithium-ion formée en couches minces.

La batterie est formée sur un substrat 10 recouvert d'une fine couche isolante 12, par exemple en oxyde de silicium, en nitrure de silicium, ou en un empilement de ces matériaux. En surface de la couche isolante 12 est formée une couche de collecteur de cathode 14, par exemple en titane. La couche 14 comprend une première partie, dans une région A, en surface de laquelle est formé l'empilement actif de la batterie. La couche 14 comprend une seconde partie destinée à recevoir un contact électrique sur sa surface.

En surface de la couche 14, dans la zone active A, est formée une couche de cathode 16. A titre d'exemple, la couche 16 peut être en TiOS, matériau adapté à insérer des ions lithium. En surface de la couche 16 est formée une couche d'électrolyte 18, par exemple en oxynitrure phosphoré de lithium (LiPON). Dans l'exemple représenté, la couche 18 s'étend d'un côté de la couche 16 jusqu'à contacter la couche isolante 12. La couche 18 s'étend également sur la couche 14 sur le contour de la couche 16.

En surface de la couche d'électrolyte 18 est formée une couche d'anode 20, par exemple en silicium ou en germanium. Ces matériaux amorphes ont la particularité de devenir conducteurs sous l'influence du lithium qui les traverse lors du fonctionnement de la batterie, les ions lithium s'alliant transitoirement avec le silicium ou le germanium.

En surface de la couche d'anode 20 est formée une couche de collecteur d'anode 22, par exemple en titane. La couche 22 s'étend, dans l'exemple représenté, sur la couche 20 et sur l'extension de la couche d'électrolyte 18 de façon à atteindre la surface de la couche isolante 12. L'extension de la couche 22 sur la couche isolante 12 permet la formation d'un contact d'anode. On notera que, outre leurs fonctions électriques, les couches de titane 14 et 20 forment également des couches barrières à la diffusion du lithium.

Dans l'exemple représenté, des plots de contact 24 et 26 sont formés sur les extensions des couches 14 et 22 formées en surface de la couche isolante 12. De façon générale, des éléments de contact tels que des fils ou des billes de soudure sont formés ensuite sur les plots de contact 24 et 26, ou encore directement sur les extensions des couches 14 et 22. Une couche de passivation est ensuite formée sur l'ensemble du dispositif. On notera que le plot de contact 26 pourra également être formé en surface de l'empilement des couches 16, 18, 20 et 22 si l'extension de la couche 22 n'est pas prévue.

Une structure telle que celle de la figure 1 dont la couche 16 est en TiOS, associé à des ions lithium, est généralement formée de la façon suivante. En surface de la couche isolante 12 est formée la couche de collecteur de cathode 14, à l'aide d'un masque adapté ou par gravure d'une couche pleine plaque. Ensuite, une couche de TiOS est formée en surface de la couche de collecteur de cathode. Cette couche est transformée en une couche de LiTiOS pour devenir la couche de cathode 16 par une évaporation métallique thermique directe de lithium. Ensuite, à l'aide d'un masque adapté ou par gravure, on forme les couches 18, 20 et 22 en surface de la couche de cathode 16.

L'insertion de lithium par le procédé ci-dessus ne permet pas de former une couche de cathode 16 de bonne qualité. On considère que ce défaut de qualité résulte de ce que, pendant cette étape et lors des étapes suivantes de chauffage, par exemple pour former des billes de soudure, des composés soufrés de lithium tels que du Li₂S, du Li₂SO₃ ou du Li₂SO₄ se forment en surface et dans le volume de la couche de TiOS. Ces composés diminueraient la qualité de la couche de cathode et donc les performances de la batterie.

Ainsi, il existe un besoin d'un procédé de formation d'une batterie de type lithium-ion en couches minces comprenant une couche de cathode en LiTiOS de qualité améliorée.

### Résumé

Un objet d'un mode de réalisation de la présente invention est de prévoir un procédé de formation d'une batterie de type lithium-ion en couches minces palliant aux inconvénients des procédés connus.

Ainsi, un mode de réalisation de la présente invention prévoit un procédé de formation d'une batterie de type lithium-ion intégrée, comprenant les étapes successives suivantes : former, sur un substrat, un empilement d'une couche de cathode en un matériau susceptible d'accueillir en son sein des ions lithium, d'une couche d'électrolyte et d'une couche d'anode de la batterie ; former un court-circuit entre les couches d'anode et de cathode ; procéder à une évaporation thermique de lithium ; et ouvrir le court-circuit entre les couches d'anode et de cathode.

Selon un mode de réalisation de la présente invention, le procédé comprend une étape préalable de formation d'une couche de collecteur de cathode sur le substrat, sous l'empilement, la couche de collecteur de cathode comprenant une extension formant un premier plot destiné à recevoir une connexion de cathode et un second plot disjoint destiné à recevoir une connexion d'anode, le court-circuit entre la couche d'anode et de cathode étant formé par une bande conductrice s'étendant entre les premier et second plots, la couche d'anode s'étendant jusqu'au second plot.

Selon un mode de réalisation de la présente invention, l'étape d'ouverture du court-circuit est réalisée en coupant la bande à l'aide d'un laser ou en réalisant une lithogravure.

Selon un mode de réalisation de la présente invention, le procédé comprend en outre, après l'étape d'évaporation, une étape de formation d'une couche de collecteur d'anode et une étape de formation d'une couche de passivation sur la structure.

Selon un mode de réalisation de la présente invention, la couche de cathode est en oxysulfure de titane (TiOS) et la couche d'anode est en silicium ou en germanium.

Selon un mode de réalisation de la présente invention, la couche d'électrolyte est en oxynitrure phosphoré de lithium (LiPON).

Selon un mode de réalisation de la présente invention, la couche de collecteur de cathode, la bande conductrice et les plots sont en un même matériau.

Selon un mode de réalisation de la présente invention, le substrat est recouvert d'une couche isolante.

Un mode de réalisation de la présente invention prévoit en outre une batterie de type lithium-ion, comprenant : en surface d'un substrat, une couche de collecteur de cathode comprenant une extension formant un premier plot et un second plot, une bande conductrice étant formée entre les premier et second plots ; un empilement d'une couche de cathode, d'une couche d'électrolyte et d'une couche d'anode en surface de la couche de collecteur de cathode, la couche d'anode contactant le second plot ; et une couche de collecteur d'anode s'étendant sur la couche d'anode et contactant le second plot, la bande étant interrompue.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1, précédemment décrite, illustre une batterie de type lithium-ion classique ; et
les figures 2A à 2E sont des vues en trois dimensions illustrant des étapes d'un exemple d'un procédé selon un mode de réalisation de la présente invention.

### Description détaillée

Pour pallier aux inconvénients des procédés connus, les inventeurs prévoient un procédé de formation d'une batterie de type lithium-ion en couches minces dans lequel l'insertion d'ions lithium dans la couche de cathode est réalisée une fois formées les couches d'électrolyte et d'anode. Lors de cette étape, la batterie est placée en court-circuit.

Les figures 2A à 2E sont des vues en trois dimensions illustrant des résultats d'étapes d'un procédé de fabrication d'une batterie lithium-ion. Dans ces figures, une seule cellule élémentaire formant une batterie de type lithium-ion est représentée. De façon classique, de nombreuses batteries élémentaires sont formées simultanément en surface d'un même substrat.

A l'étape illustrée en figure 2A, on part d'une structure comprenant un substrat 30, par exemple une tranche de silicium en surface de laquelle est formée une couche isolante 32 (délimitée par des pointillés en figure 2A et dans les figures suivantes). En surface de la couche isolante 32 est formée une couche 34 en un matériau électriquement conducteur formant barrière à la diffusion du lithium, par exemple en titane.

La couche 34 comporte différentes portions. Une première portion de cette couche est formée au niveau d'une région A destinée à recevoir l'empilement actif de la batterie. La couche 34 se prolonge pour former un plot 36 destiné à recevoir une connexion de cathode. Une portion disjointe de la couche 34 forme un plot 38 destiné à recevoir une connexion d'anode. Une bande conductrice 40 est formée entre les plots 36 et 38. La bande 40 peut être constituée du même matériau que la couche 34 ou d'un matériau conducteur différent de celui de la couche 34.

A titre d'exemple, la couche 34 et les plots 36 et 38 et la bande 40 peuvent être formées par un dépôt d'une couche de titane pleine plaque puis par une gravure de cette couche au travers d'un masque. Elle peut également être formée par un dépôt direct au travers d'un masque.

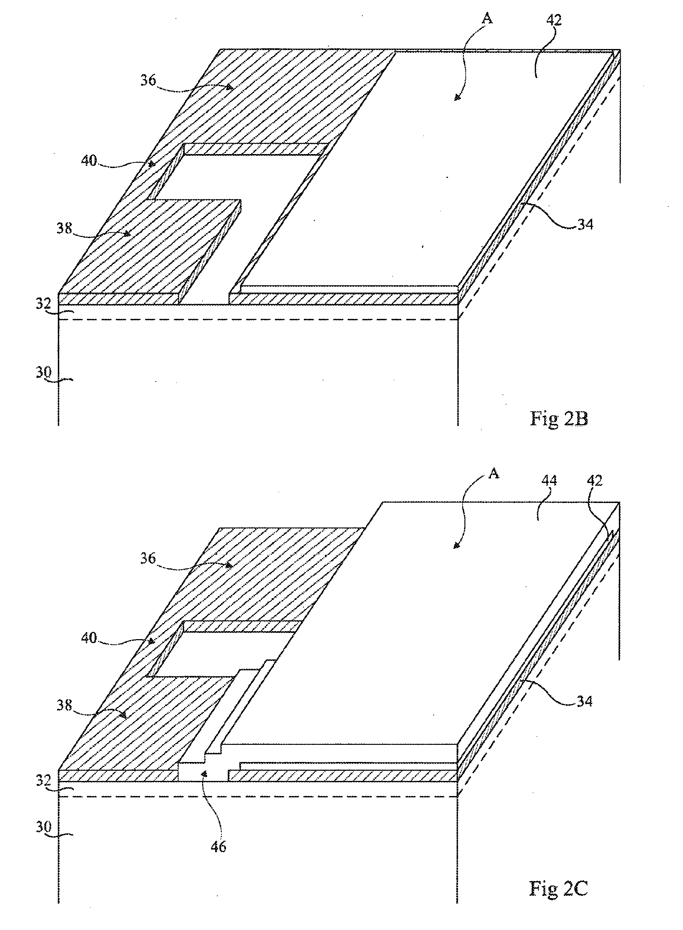

A l'étape illustrée en figure 2B, on a formé une couche 42 d'oxysulfure de titane (TiOS) sur la couche 34, au niveau de la zone active A. La couche 42 ne s'étend pas au-dessus des plots 36 et 38 et s'étend, de préférence, sur une surface de la zone active A inférieure à la surface de la couche 34. Ceci permet d'éviter tout problème d'alignement et de court-circuit entre les différentes couches de l'empilement. La couche 42 constitue une couche initiale pour la formation de la cathode de la batterie. A titre d'exemple, la couche 42 peut avoir une épaisseur comprise entre 1 et 5 µm.

A l'étape illustrée en figure 2C, on a formé, en surface de la couche 42, une couche d'électrolyte 44, par exemple en oxynitrure phosphoré de lithium (LiPON). La couche 44 comporte une extension 46 qui vient au contact de la couche isolante 32 et du plot 38, entre la couche 34 et le plot 38. La couche 44 peut également s'étendre légèrement sur le plot 38. De plus, de préférence, elle s'étend légèrement au-delà de la couche 42 dans la zone active A pour contacter la couche 34. De façon connue, le LiPON est isolant électrique. Ainsi, la couche 42 est isolée des couches formées ultérieurement sur l'empilement. A titre d'exemple, les couches 42 et 44 pourront être formées à l'aide d'un masque adapté et la couche 44 peut avoir une épaisseur comprise entre 1 et 3 µm.

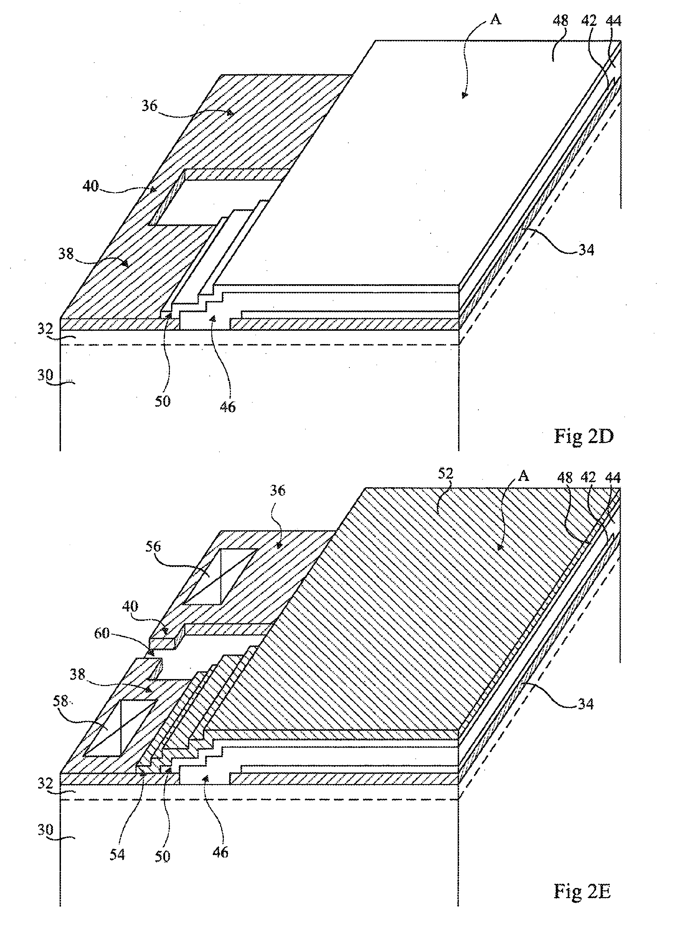

A l'étape illustrée en figure 2D, on a formé une couche d'anode 48 sur la couche d'électrolyte 44, au niveau de la zone active A. A titre d'exemple, la couche 48 peut être en silicium ou en germanium amorphe. La couche 48 comprend une extension 50 au-dessus de l'extension 46 de la couche d'électrolyte 44. L'extension 50 est prévue pour contacter le plot d'anode 38. A titre d'exemple, la couche 48 peut avoir une épaisseur de 50 à 800 nm.

Ensuite seulement, on réalise une insertion d'ions lithium pour transformer la couche 42 de TiOS en une couche de LiTiOS. Pour cela, on dépose du lithium sur la couche d'anode 48 via une évaporation métallique thermique de celui-ci. Le silicium ou le germanium de la couche 48 devient alors conducteur sous l'influence du lithium et la batterie se met à fonctionner en court-circuit, par l'intermédiaire de l'extension 50 et de la bande 40. Des ions lithium transitent en cours d'évaporation de la couche d'anode 48 vers la couche de cathode 42 et la batterie arrive à un état complètement déchargé dans lequel les ions lithium sont majoritairement situés dans la couche de cathode.

Ce procédé d'insertion de lithium dans la couche 42 correspond à un fonctionnement normal de la batterie, lorsqu'elle celle-ci et connectée à une charge. Le court-circuit formé par l'extension 40 est maintenu pendant toute l'évaporation du lithium et la pénétration des ions Li⁺ dans la couche 42. La durée d'évaporation pourra être prévue d'environ une heure.

A l'étape illustrée en figure 2E, on a formé une couche de collecteur d'anode 52 sur la structure. La couche s'étend, dans la zone active A, sur l'empilement des couches 34, 42, 44 et 48. La couche 52 comprend une extension 54 qui s'étend sur l'extension 50 jusqu'à contacter le plot d'anode 38. La couche 52 peut par exemple être en titane.

Des zones de connexion, non représentées en détail, respectivement 56 et 58, sont ensuite formées sur les plots 36, respectivement 38. Une couche de passivation et d'encapsulation peut ensuite être formée sur l'ensemble du dispositif. On notera que les zones de connexion 56 et 58 pourront également être formées après toute autre étape du procédé décrit ici.

Selon un mode de réalisation, avant ou après l'étape d'encapsulation, une coupure est réalisée dans l'extension 40 entre les plots 36 et 38. Cette coupure 60 peut être réalisée à l'aide d'un laser ou par une étape de lithogravure. Ainsi, les électrodes d'anode et de cathode sont séparées, la batterie n'est plus en court-circuit et est prête à être chargée. On notera que le matériau formant la bande 40 pourra être en un matériau conducteur différent de celui de la couche de collecteur de cathode 34 facilitant cette étape de coupure.

Le procédé présenté ici a l'avantage de prévoir une étape d'insertion d'ions lithium dans la couche de cathode une fois celle-ci recouverte de la couche d'électrolyte et de la couche d'anode. Ainsi, on obtient une batterie présentant une meilleure capacité de charge et permettant un plus grand nombre de cycles de fonctionnement que les batteries antérieures. De plus, cette batterie supporte mieux les traitements thermiques (par exemple pendant une étape ultérieure de soudure) que les batteries connues.

La fabrication des batteries est généralement suivie d'un test. Pour réaliser ce test, les batteries sont déchargées. Le procédé présenté ici présente l'avantage de former des batteries dont, l'état en fin de fabrication, est un état déchargé. Ainsi, il n'est pas nécessaire de prévoir une étape de décharge des batteries avant la réalisation d'un test.

Des modes de réalisation particuliers de la présente invention ont été décrits. Diverses variantes et modifications apparaîtront à l'homme de l'art. En particulier, on notera que le procédé présenté ici comprend plusieurs étapes clés : former l'empilement des couches de cathode, d'électrolyte et d'anode, la couche de cathode étant destinée à accueillir du lithium ; mettre en court-circuit les couches d'anode et de cathode ; faire pénétrer des ions lithium dans la couche de cathode, au travers des couches d'anode et d'électrolyte, par évaporation métallique de lithium ; et ouvrir le court-circuit entre les couches d'anode et de cathode.

Ainsi, les étapes de formation d'un court-circuit entre les couches d'anode et de cathode, et d'annulation de ce court-circuit une fois l'insertion de lithium réalisée, pourront être réalisées différemment de la façon présentée ici.

Le procédé présenté ici permet d'obtenir des batteries délivrant des tensions de valeurs inférieures à 3 V. Ces batteries sont, entre autre, particulièrement adaptées pour alimenter des circuits de maintien de l'information (horloge temps réel, mémoires RAM non volatiles...).

## Revendications

1. Procédé de formation d'une batterie de type lithium-ion intégrée, comprenant les étapes successives suivantes :
former, sur un substrat (30), un empilement d'une couche de cathode (34) en un matériau susceptible d'accueillir en son sein des ions lithium, d'une couche d'électrolyte (42) et d'une couche d'anode (44) de la batterie ;
former un court-circuit entre les couches d'anode et de cathode ;
procéder à une évaporation thermique de lithium ; et
ouvrir le court-circuit entre les couches d'anode et de cathode.

2. Procédé selon la revendication 1, comprenant une étape préalable de formation d'une couche de collecteur de cathode (34) sur le substrat, sous ledit empilement, la couche de collecteur de cathode comprenant une extension formant un premier plot (36) destiné à recevoir une connexion de cathode (56) et un second plot disjoint (38) destiné à recevoir une connexion d'anode (58), le court-circuit entre la couche d'anode et de cathode étant formé par une bande conductrice (40) s'étendant entre les premier et second plots (36, 38), la couche d'anode (48) s'étendant jusqu'au second plot (38).

3. Procédé selon la revendication 2, dans lequel l'étape d'ouverture du court-circuit est réalisée en coupant la bande (40) à l'aide d'un laser ou en réalisant une lithogravure.

4. Procédé selon l'une quelconque des revendications 1 à 3, comprenant en outre, après l'étape d'évaporation, une étape de formation d'une couche de collecteur d'anode (52) et une étape de formation d'une couche de passivation sur la structure.

5. Procédé selon l'une quelconque des revendications 1 à 4, dans lequel la couche de cathode est en oxysulfure de titane (TiOS) et la couche d'anode est en silicium ou en germanium.

6. Procédé selon l'une quelconque des revendications 1 à 5, dans lequel la couche d'électrolyte est en oxynitrure phosphoré de lithium (LiPON).

7. Procédé selon l'une quelconque des revendications 2 à 6, dans lequel la couche de collecteur de cathode (34), la bande conductrice (40) et les plots (36, 38) sont en un même matériau.

8. Procédé selon l'une quelconque des revendications 1 à 7, dans lequel le substrat (30) est recouvert d'une couche isolante (32).

9. Batterie de type lithium-ion, comprenant :
en surface d'un substrat (30), une couche de collecteur de cathode (34) comprenant une extension formant un premier plot (36) et un second plot (38), une bande conductrice (40) étant formée entre les premier et second plots ;
un empilement d'une couche de cathode (42), d'une couche d'électrolyte (44) et d'une couche d'anode (48) en surface de la couche de collecteur de cathode, la couche d'anode contactant ledit second plot ; et
une couche de collecteur d'anode (52) s'étendant sur la couche d'anode (48) et contactant ledit second plot (38),
ladite bande (40) étant interrompue.

## Patentansprüche

1. Ein Verfahren zum Aufbau einer Batterie vom Lithium-Ionen-Typ, wobei die folgenden aufeinanderfolgenden Schritte vorgesehen sind:
Formen auf einem Substrat (30) einen Stapel aus einer Kathodenschicht (34) hergestellt aus einem Lithium-Ionen-aufnehmenden Material, aus einer Elektrolytschicht (42) und einer Anodenschicht (44) der Batterie;
Formen eines Kurzschlusses zwischen den Anoden- und Kathodensch ichten;
Durchführung einer thermischen Verdampfung des Lithiums; und Öffnen des Kurzschlusses zwischen den Anoden- und Kathodenschichten.

2. Das Verfahren nach Anspruch 1, wobei folgendes vorgesehen ist: ein vorhergehender Schritt des Formens einer Kathoden-Kollektor-Schicht (34) auf dem Substrat unter dem Stapel, wobei die Kathoden-Kollektor-Schicht eine Verlängerung aufweist, die einen ersten Abschnitt (36) aufweist, vorgesehen zur Aufnahme einer Kathodenverbindung (56) und ferner einen zweiten gesonderten Abschnitt (38), vorgesehen zur Aufnahme einer Anodenverbindung (58), wobei der Kurzschluss zwischen der Anodenschicht und der Kathodenschicht durch einen leitenden Streifen (40) gebildet ist, der sich zwischen den ersten und zweiten Abschnitten (36, 38) erstreckt, und wobei sich die Anodenschicht (48) zum zweiten Abschnitt (38) erstreckt.

3. Das Verfahren nach Anspruch 2, wobei der Schritt der Öffnung des Kurzschlusses durch Zerschneiden des Streifens (40) mittels eines Lasers oder durch eine Fotolithografie durchgeführt wird.

4. Das Verfahren nach einem der Ansprüche 1 bis 3, wobei ferner nach dem Verdampfungsschritt ein Schritt des Formens einer Anoden-Kollektor-Schicht (52) und ein Schritt des Formens einer Passivierungsschicht auf der Struktur vorgesehen ist.

5. Das Verfahren nach einem der Ansprüche 1 bis 4, wobei die Kathodenschicht aus einem Titan-Oxisulfid (TiOS) und der Anodenschicht aus Silizium oder Germanium hergestellt sind.

6. Das Verfahren nach einem der Ansprüche 1 bis 5, wobei die Elektrolytschicht aus Lithium-Phosphor-Oxinitrid (LiPON) hergestellt ist.

7. Das Verfahren nach einem der Ansprüche 2 bis 6, wobei die Kathoden-Kollektor-Schicht (34), der leitende Streifen (40) und die Abschnitte (36, 38) aus einem gleichen Material hergestellt sind.

8. Das Verfahren nach einem der Ansprüche 1 bis 7, wobei das Substrat (30) mit einer Isolierschicht (32) bedeckt ist.

9. Eine Batterie des Lithium-Ionen-Typs, die folgendes aufweist:
an der Oberfläche eines Substrats (30) eine Kathoden-Kollektor-Schicht (34), die eine Verlängerung aufweist, die einen ersten Abschnitt (36) und einen zweiten Abschnitt (38) bildet, wobei ein leitender Streifen (40) zwischen den ersten und zweiten Abschnitten gebildet ist;
ein Stapel aus einer Kathoden-Schicht (42), einer Elektrolyt-Schicht (44) und einer Anoden-Schicht (48) an der Oberfläche der Kathoden-Kollektor-Schicht, wobei die Anoden-Schicht den erwähnten zweiten Abschnitt kontaktiert; und
eine Anoden-Kollektor-Schicht (52), die sich auf der Anodenschicht (48) erstreckt und den zweiten Abschnitt (38) kontaktiert,
wobei der Streifen (40) unterbrochen ist.

## Claims

1. A method for forming an integrated lithium-ion type battery, comprising the successive steps of:
forming, on a substrate (30), a stack of a cathode layer (34) made of a material capable of receiving lithium ions, of an electrolyte layer (42), and of an anode layer (44) of the battery;
forming a short-circuit between the anode and cathode layers;
performing a thermal evaporation of lithium; and
opening the short-circuit between the anode and cathode layers.

2. The method of claim 1, comprising a previous step of forming of a cathode collector layer (34) on the substrate, under said stack, the cathode collector layer comprising an extension forming a first pad (36) intended to receive a cathode connection (56) and a second separate pad (38) intended to receive an anode connection (58), the short-circuit between the anode and cathode layer (40) being formed by a conductive strip extending between the first and second pads (36, 38), the anode layer (48) extending all the way to the second pad (38).

3. The method of claim 2, wherein the step of opening of the short-circuit is performed by cutting the strip (40) by means of a laser or by performing a photolithography.

4. The method of any of claims 1 to 3, further comprising, after the evaporation step, a step of forming of an anode collector layer (52) and a step of forming of a passivation layer on the structure.

5. The method of any of claims 1 to 4, wherein the cathode layer is made of titanium oxysulfide (TiOS) and the anode layer is made of silicon or germanium.

6. The method of any of claims 1 to 5, wherein the electrolyte layer is made of lithium phosphorus oxynitride (LiPON) .

7. The method of any of claims 2 to 6, wherein the cathode collector layer (34), the conductive strip (40), and the pads (36, 38) are made of a same material.

8. The method of any of claims 1 to 7, wherein the substrate (30) is covered with an insulating layer (32).

9. A lithium-ion type battery, comprising:
at the surface of a substrate (30), a cathode collector layer (34) comprising an extension forming a first pad (36) and a second pad (38), a conductive strip (40) being formed between the first and second pads;
a stack of a cathode layer (42), an electrolyte layer (44), and an anode layer (48) at the surface of the cathode collector layer, the anode layer contacting said second pad; and
an anode collector layer (52) extending on the anode layer (48) and contacting said second pad (38),
said strip (40) being interrupted.
